# EUROPEAN PATENT SPECIFICATION

(11) **EP 3 198 320 B1**
(45) Date of publication and mention of the grant of the patent: **20.03.2019**
(21) Application number: 15818063.8
(22) Date of filing: 18.09.2015
(51) Int. Cl.: G02B 6/44

(54) **MOBILE HOUSING DEVICE FOR AN OPTICAL FIBRE COIL AND RELATED OPERATING PROCEDURE OF THE MOBILE DEVICE**
MOBILE GEHÄUSEVORRICHTUNG FÜR EINE GLASFASERSPULE UND ZUGEHÖRIGES BETRIEBSVERFAHREN DER MOBILEN VORRICHTUNG
DISPOSITIF BOÎTIER MOBILE DESTINÉ À UNE BOBINE DE FIBRE OPTIQUE, ET PROCÉDURE DE FONCTIONNEMENT CONNEXE DU DISPOSITIF MOBILE

(30) Priority: 22.09.2014 IT RM20140535
(43) Date of publication of application: 02.08.2017
(73) Proprietor: Fibernet S.r.l., 00161 Roma (IT)
(72) Inventor: TRINEI, Giancarlo, 00161 Roma (IT); TRINEI, Matteo, 00161 Roma (IT)
(74) Representative: Garavelli, Paolo
(86) International application number: PCT/IT2015/000235
(87) International publication number: WO 2016/046857

(56) References cited:
- DE-U1-202012 003 469
- GB-A- 2 373 493
- JP-A- 2007 242 105
- JP-A- 2008 033 013
- US-B1- 7 784 727

## Description

The present invention refers to a mobile housing device of an optical fibre coil and to a related operating procedure of the mobile device.

In particular, the present invention refers to a mobile device for testing, certifying and maintaining optical fibre networks with an optical reflectometer in the time domain, known as OTDR - Optical Time Domain Reflectometer.

The necessary instruments to perform measures in optical fibre networks with an optical time domain reflectometer comprise a launch coil, namely a coil for unwinding several hundreds of meters of optical fibres interposed between the OTDR and the plant subjected to a measure. The launch coil allows overcoming the so-called blind area, in which the reflectometer cannot provide reliable results. The blind area depends on the incompatibility between the switching interval of the apparatus electronics, some µs maximum, and the necessary time to be able to complete the passage from the transmission phase to the reception phase. Substantially, the measuring instrument cannot be arranged for physically fetching the return reflections towards the apparatus.

Several patents are known, which deal with measures performer on optical fibre networks with an optical time domain reflectometer.

Patent JP2008033013A discloses a mobile container of an optical fibre coil equipped with elastic and sliding means adapted to allow extracting the coil and blocking a sprocket inside the mobile container. Patent EP1597620 discloses a retractable optical fibre apparatus comprising a housing, a rotary sprocket arranged inside the housing and an optical wave guide wound on the sprocket. The optical wave guide is composed of a central section lacking a coating and end optical fibre sections with sheath having their ends occupied by optical connectors. The optical wave guide is wound on the sprocket so that the end optical fibre sections with sheath are extracted from the sprocket along the same direction. The sprocket can rotate along a first rotation direction with respect to the body, through a torsion spring which allows re-winding the optical fibre. A mechanical stopper is provided to prevent the rotation of the sprocket along an opposite direction to the first direction.

However, the retractable optical fibre apparatus does not solve the problem of possibly damaging the optical fibre when unwinding and extracting the optical connectors from inside the housing. In particular: squashing and damaging the optical fibre section with sheath deriving from an accidental closure of the container cover, from an accidental closure of cabinet doors or for treading; damages of connectors due to excessive traction. Moreover, currently, the launch coils are heavy and cumbersome.

Other relevant patents are: DE202012003469U1, GB2373493A, US7784727B1, JP2007242105A.

Object of the present invention is solving the above prior art problems by providing a compact device, which can be simply and economically built, capable of allowing the extraction of end connectors through a mechanism composed of few components, equipped with protections adapted to remove damages of ends coated with a sheath.

The above and other objects and advantages of the invention, as will appear from the following description, are obtained with a mobile housing device for an optical fibre coil as claimed in claim 1. Moreover, the above and other objects and advantages of the invention, are obtained with an operating procedure of a mobile housing device for an optical fibre coil as claimed in claim 7.

Preferred embodiments and non trivial variations of the present invention are the subject matter of the dependent claims.

It is intended that all enclosed claims are an integral part of the present description.

It will be immediately obvious that numerous variations and modifications (for example, related to shape, sizes, arrangements and parts with equivalent functionality) can be made to what is described without departing from the scope of the invention as appears from the enclosed claims.

The present invention will be better described by some preferred embodiments thereof, provided as a non-limiting example, with reference to the enclosed drawings, in which:

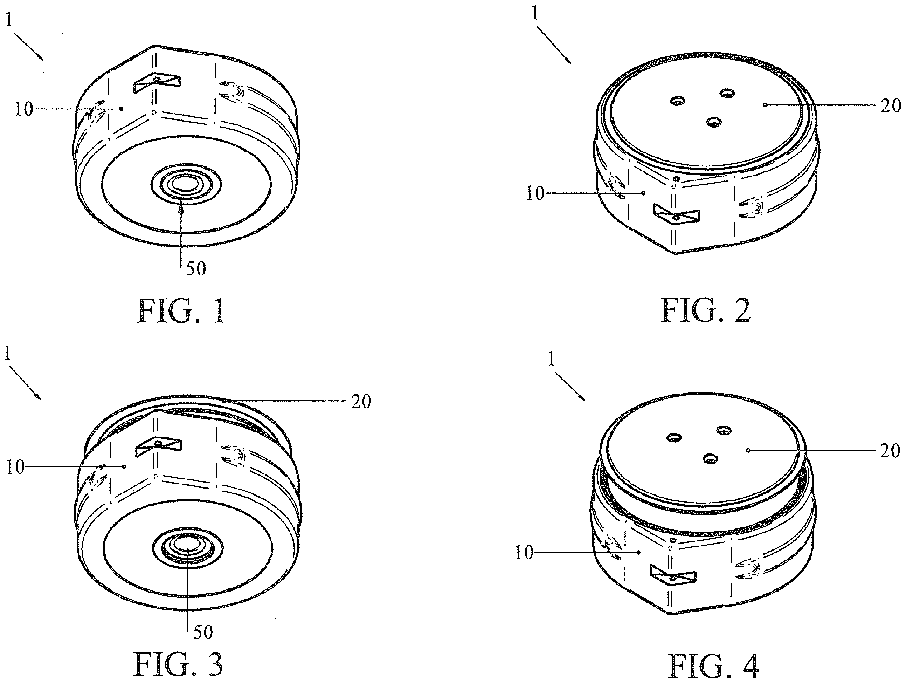

Figures 1 and 2 shows an axonometric view of an embodiment, in a closed configuration, of the mobile housing device for an optical fibre coil according to the present invention;
Figures 3 and 5 shows an axonometric view of an embodiment, in an open configuration, of the mobile housing device for an optical fibre coil according to the present invention;
Figure 5 shows a side view of the main separate parts of an embodiment of the mobile housing device for an optical fibre coil according to the present invention;
Figure 6 shows a section along line VI-VI of the previous figure;

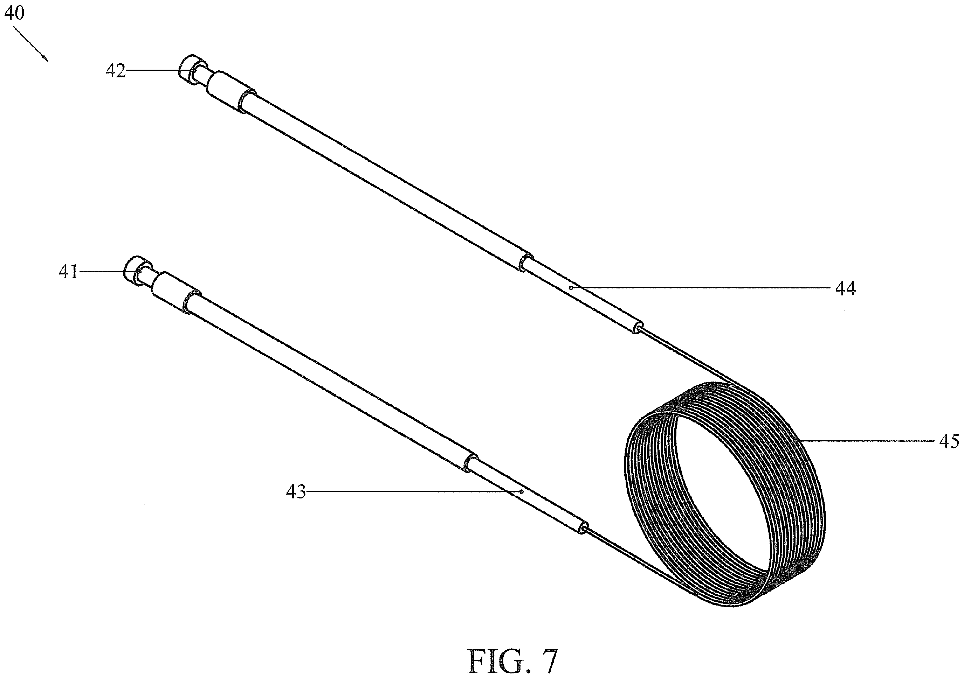

Figure 7 shows an axonometric view of an optical fibre coil, of an embodiment of the mobile housing device for an optical fibre coil according to the present invention;
Figure 8 shows a side view of Figure 1;
Figure 9 shows a sectional view along line IX-IX of the previous figure;
Figures 10 and 11 respectively show a partial enlarged section of parts X and XI of the previous figure;
Figure 12 shows a side view of Figure 1, in an unlocking step of the mobile parts of an embodiment of the mobile housing device for an optical fibre coil according to the present invention;
Figure 13 shows a sectional view along line XIII-XIII of the previous figure;
Figures 14 and 15 respectively show an enlarged partial section of parts XIV and XV of the previous figure;
Figure 16 shows a side view of Figure 4, in an open configuration of an embodiment of the mobile housing device for an optical fibre coil according to the present invention;
Figure 17 shows a sectional view along line XVII-XVII of the previous figure;
Figures 18 and 19 respectively show an enlarged partial section of parts XVIII and XIX of the previous figure.

With reference to the enclosed Figures, it is possible to note that a mobile housing device 1 for an optical fibre coil 40 comprises a container 10 accessible by means of a cover 20 to be able to house at least one sprocket 30.

The sprocket 30 allows winding at least one optical fibre 45 belonging to the optical fibre coil 40.

The optical fibre 45 is connected to at least one connection terminal 41, 42.

The mobile device 1 comprises elastic means 11, 31, 43, 44, 51 and sliding means 50 adapted to allow automatically extracting at least one connection terminal 41, 42 from the container 10.

The cover 20 comprises an elastic edge 21 matching with a respective edge 12 of the container 10.

The elastic edge 21 allows closing the container 10 to block the unwinding of the optical fibre coil 40, once having automatically extracted at least one connection terminal 41, 42 from the container 10.

The optical fibre coil 40 comprises at least one section of flexible sheath belonging to the elastic means 43, 44. In addition to covering the ends of the optical fibre 45, the flexible sheath 43, 44 allows elastically straightening the respective extreme section of the optical fibre 45. Through the flexible sheath, it is possible to automatically extract the connection terminals 41, 42 from the container 10.

The sprocket 30 comprises a first annular room 32 adapted to allow winding and housing the optical fibre 45 and a second annular room 33 adapted to allow winding and housing the sections of flexible sheath 43, 44 connected to the respective connection terminals 41, 42.

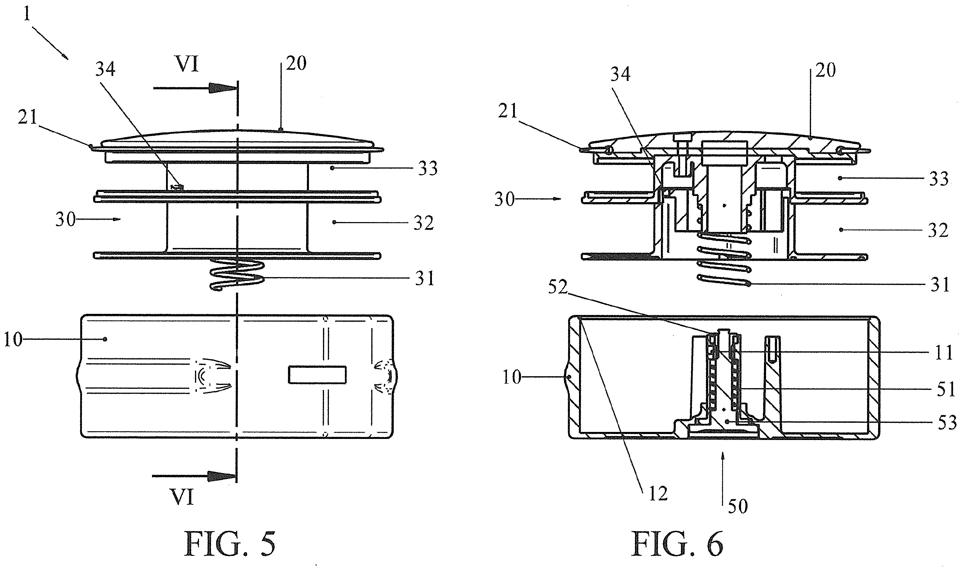

With reference to Figure 6, the first and second annular room 32, 33 can communicate by means of at least one slit 34 adapted to allow connecting the optical fibre 45 with the respective connection terminals 41, 42 through the end sections coated with the flexible sheath 3, 44.

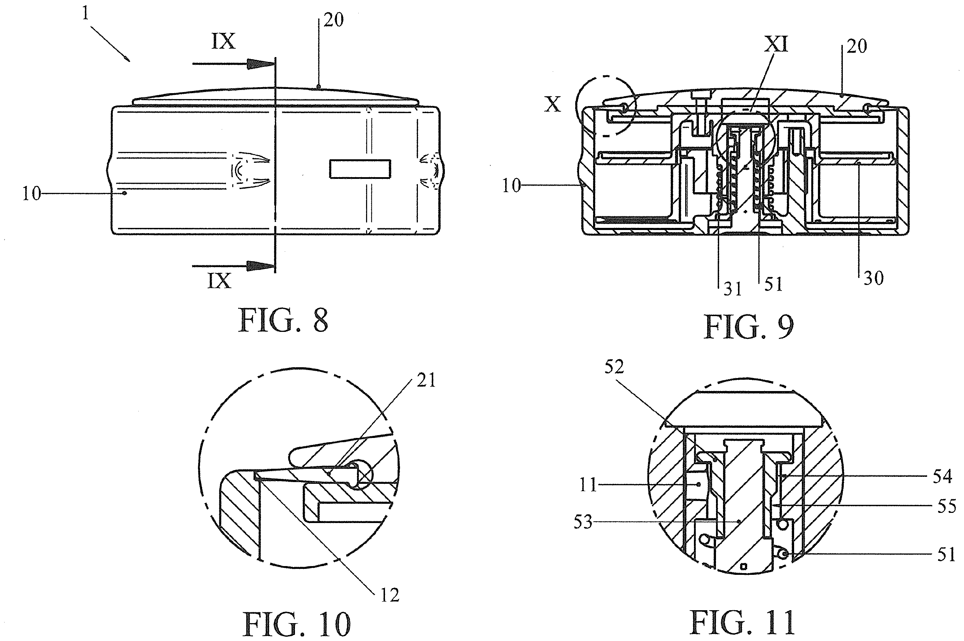

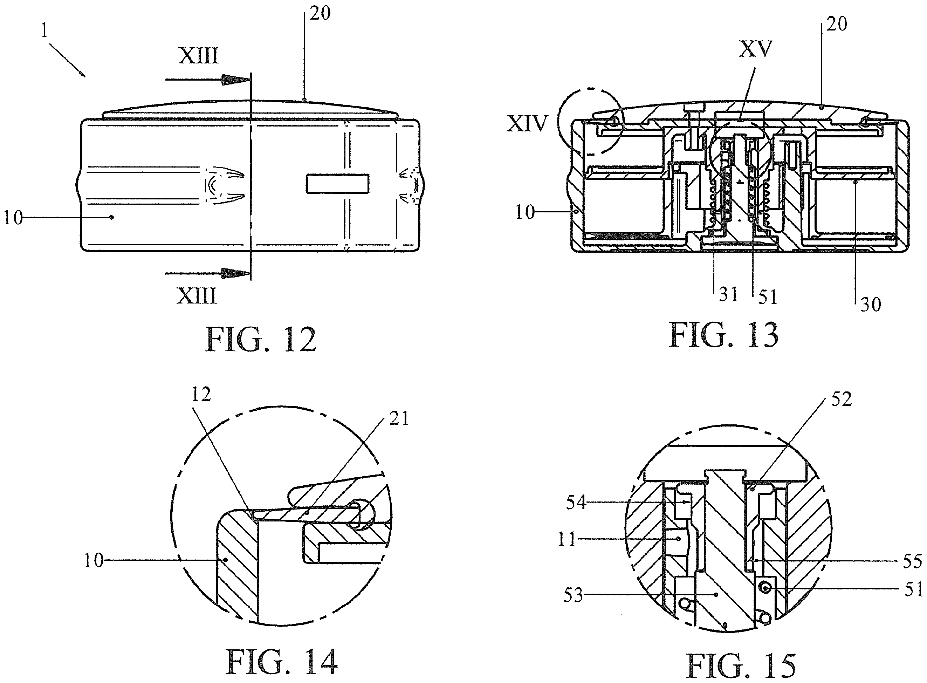

With reference to Figures 8 to 15, the sprocket 30 è connected to the container 10 by means of at least one radial spring 11 and an axial spring 31.

When the sprocket 30 is housed inside the container 10, each radial spring 11 presses on a shaped cylinder 52 belonging to the sliding means 50 blocking the sprocket 30 inside the container 10. The axial spring 31 allows separating and lifting the sprocket 30 with respect to the container 10.

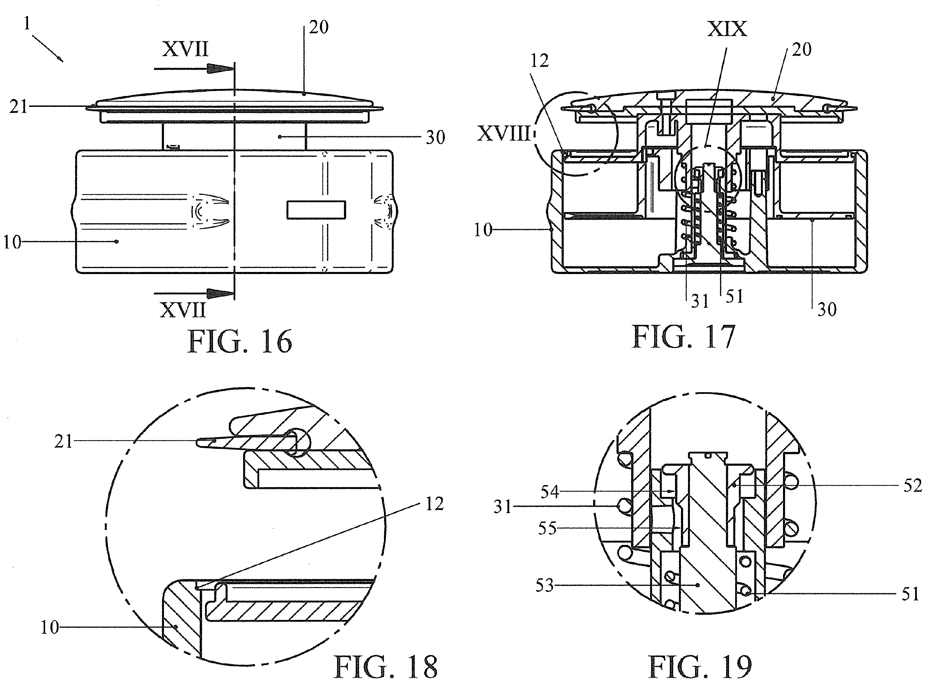

The shaped cylinder 52 comprises a first and a second section 54, 55. When the first section 54 is pressed by the radial spring 11, the sprocket 30 remains blocked inside the container 10. When the radial spring 11 is at the same height of the second recessed section 55, the sprocket 30 is free of lifting, pushed by the axial spring 31 and of being separated from the container 10, as shown in Figures 16 to 19.

The shaped cylinder 52 is connected to a push-button 53 adapted to be manually pressed.

The sprocket 30 is integral with the cover 20.

According to a preferred configuration, at least the container 10 and the cover 20 are made of metal to be able to confer sturdiness to the device.

An operating procedure of a mobile housing device 1 for an optical fibre coil 40 comprises the following steps:
a) when the mobile device 1 containing the optical fibre coil 40 is closed, the radial spring 11 presses onto the profile 54 of the shaped cylinder 52 belonging to the sliding means 50. The axial spring 31 presses the sprocket 30 with respect to the container 10. The elastic edge 21 of the cover 20 matches with the respective edge 12 of the container 10. The wound optical fibre 45 is housed in the first annular room 32 of the sprocket 30; at least one section of flexible sheath 43, 44 and at least one connection terminal 41, 42 are houses, being wound, in the second annular room 33 of the sprocket 30.
b) for opening the mobile device 1, by manually pressing the push-button 53, the radial spring 11 is operating at the same height of the recessed profile 55 of the shaped cylinder 52 allowing to unlock the sprocket 30. The axial spring 31 pushes the sprocket 30 with respect to the container 10 allowing to lift the sprocket 30 and to open the cover 20 with respect to the container 10. The wound optical fibre 45 is housed in the annular room 32 of the sprocket 30; at least one section of flexible sheath 43, 44 and at least one connection terminal 41, 42 are pushed outside the container 10 due to the elasticity of each section of flexible sheath 43, 44.
c) for closing the mobile device 1, by manually pressing the cover 20, step a) is restored. The elastic edge 21 of the cover 20 matches with the respective edge 12 of the container 10. The wound optical fibre 45 is housed in the first annular room 32 of the sprocket 30; at least one section of flexible sheath 43, 44 and at least one connection terminal 41, 42 are blocked outside the container 10. The elastic edge 21 of the cover 20 matches with the respective edge 12 of the container 10, pressing in a spot of the section of flexible sheath 43, 44.

## Claims

1. Mobile housing device (1) for an optical fibre coil (40), comprising a container (10) accessible by means of a cover (20) to be able to house at least one sprocket (30), said at least one sprocket (30) adapted to allow winding at least one optical fibre (45) belonging to said optical fibre coil (40), said optical fibre (45) connected to at least one connection terminal (41, 42), elastic means (11, 31, 43, 44, 51) and sliding means (50) adapted to allow automatically extracting said at least one connection terminal (41, 42) from said container (10, said cover (20) comprising an elastic edge (21) matching with a respective edge (12) of said container (10), said elastic edge (21) adapted to allow closing said container (10) to block the unwinding of said optical fibre coil (40), once having automatically extracted said at least one connection terminal (41, 42) from said container (10), **characterized in that** said at least one sprocket (30) is connected to said container (10) by means of at least one radial spring (11) and one axial spring (31), said at least one radial spring (11) and one axial spring (31) respectively belonging to said elastic means (11, 31), said at least one radial spring adapted to push a shaped cylinder (52) belonging to said sliding means (50) to block said at least one sprocket (30) inside said container (10), said axial spring adapted to separate and lift said at least one sprocket (30) with respect to said container (10).

2. Mobile housing device (1) for an optical fibre coil (40) according to the previous claim, **characterized in that** said shaped cylinder (52) comprises a first and a second section (54, 55), respectively adapted to interact with said at least one radial spring belonging to said elastic means (11) to allow blocking said at least one sprocket (30) inside said container (10) and to allow separating and lifting said at least one sprocket (30) with respect to said container (10).

3. Mobile housing device (1) for an optical fibre coil (40) according to the previous claim, **characterized in that** said shaped cylinder (52) is connected to a push-button (53) adapted to be manually pressed.

4. Mobile housing device (1) for an optical fibre coil (40) according to the previous claim, **characterized in that** said at least one sprocket (30) is integral with said cover (20).

5. Mobile housing device (1) for an optical fibre coil (40) according to the previous claim, **characterized in that** at least said container (10) and said cover (20) are made of metal to be able to confer sturdiness to the device.

6. Operating procedure for a mobile housing device (1) for an optical fibre coil (40) according to any one of the previous claims, **characterized in that** it comprises the following steps:
a) when the mobile device (1) containing the optical fibre coil (40) is closed, the radial spring belonging to the elastic means (11) presses on the profile (54) of the shaped cylinder (52) belonging to the sliding means (50), the axial spring belonging to the elastic means (31) pressing the sprocket (30) with respect to the container (10), the elastic edge (21) of the cover (20) matching with the respective edge (12) of the container (10), the wound optical fibre (45) being housed in the first annular room (32) of the sprocket (30), at least one section of flexible sheath (43, 44) and at least one connection terminal (41, 42) being housed, being wound, in the second annular room (33) of the sprocket (30);
b) for opening the mobile device (1), by manually pressing the push-button (53), the radial spring belonging to the elastic means (11) presses on the profile (55) of the shaped cylinder (52) to allow unblocking the sprocket (30), the axial spring belonging to the elastic means (31) pushing the sprocket (30) with respect to the container (10) allowing to lift the sprocket (30) and to open the cover (20) with respect to the container (10), the wound optical fibre (45) being housed in the first annular room (32) of the sprocket (30), at least one section of flexible sheath (43, 44) and at least one connection terminal (41, 42) being pushed outside the container (10) due to the elasticity of the at least one section of flexible sheath (43, 44);
c) for closing the mobile device (1), by manually pressing the cover (20), step a) is restored, the elastic edge (21) of the cover (20) matching with the respective edge (12) of the container (10), the wound optical fibre (45) being housed in the first annular room (32) of the sprocket (30), at least one section of flexible sheath (43, 44) and at least one connection terminal (41, 42) remaining blocked outside the container (10), the elastic edge (21) of the cover (20) matching with the respective edge (12) of the container (10), pressing in a spot of the section of flexible sheath (43, 44).

## Patentansprüche

1. Bewegliche Aufnahmevorrichtung (1) einer optischen Faserspule (40), die einen Behälter (10) enthält, der über einen Deckel (20) zugänglich ist, um mindestens eine Spule (30) aufnehmen zu können, die genannte mindestens eine Spule (30) dient dazu, zu ermöglichen, mindestens eine optische Faser (45) aufzuwickeln, die der genannten optischen Faserspule (40) angehört, die genannte optische Faser (45) ist mit mindestens einem Anschlussende (41, 42), elastischen Vorrichtungen (11, 31, 43, 44, 51) und Gleitvorrichtungen (50) verbunden, welche dazu dienen, zu ermöglichen, automatisch das genannte mindestens eine Anschlussende (41, 42) aus dem genannten Behälter (10) zu entnehmen, der genannte Deckel (20) enthält eine elastische Kante (21), die mit einer entsprechenden Kante (12) des genannten Behälters (10) übereinstimmt, die genannte elastische Kante (21) dient dazu, zu ermöglichen, den genannten Behälter (10) zu schließen, um das Abwickeln der genannten optischen Faserspule (40) zu blockieren, nachdem das genannte mindestens eine Anschlussende (41, 42) aus dem genannten Behälter (10) automatisch entnommen wurde, und ist **dadurch gekennzeichnet, dass** die genannte mindestens eine Spule (30) mit dem genannten Behälter (10) durch mindestens eine Radialfeder (11) und eine Axialfeder (31) verbunden ist, die genannten mindestens eine Radialfeder (11) und eine Axialfeder (31) gehören jeweils den genannten elastischen Vorrichtungen (11, 31) an, die genannte mindestens eine Radialfeder dient dazu, einen Formzylinder (52) zu schieben, der den genannten Gleitvorrichtungen (50) angehört, um die genannte mindestens eine Spule (30) im genannten Behälter (10) zu blockieren, die genannte Axialfeder dient dazu, die genannte mindestens eine Spule (30) vom genannten Behälter (10) zu trennen und anzuheben.

2. Bewegliche Aufnahmevorrichtung (1) einer optischen Faserspule (40) gemäß dem vorhergehenden Patentanspruch, die **dadurch gekennzeichnet ist, dass** der genannte Formzylinder (52) einen ersten und einen zweiten Abschnitt (54, 55) enthält, die jeweils dazu dienen, mit der genannten mindestens einen Radialfeder zu interagieren, die den genannten elastischen Vorrichtungen (11) angehört, um zu ermöglichen, die genannte mindestens eine Spule (30) im genannten Behälter (10) zu blockieren, und um zu ermöglichen, die genannte mindestens eine Spule (30) vom genannten Behälter (10) zu trennen und anzuheben.

3. Bewegliche Aufnahmevorrichtung (1) einer optischen Faserspule (40) gemäß dem vorhergehenden Patentanspruch, die **dadurch gekennzeichnet ist, dass** der genannte Formzylinder (52) mit einer Taste (53) verbunden ist, die dazu dient, manuell gedrückt zu werden.

4. Bewegliche Aufnahmevorrichtung (1) einer optischen Faserspule (40) gemäß dem vorhergehenden Patentanspruch, die **dadurch gekennzeichnet ist, dass** die genannte mindestens eine Spule einteilig mit dem genannten Behälter (20) ist.

5. Bewegliche Aufnahmevorrichtung (1) einer optischen Faserspule (40) gemäß dem vorhergehenden Patentanspruch, die **dadurch gekennzeichnet ist, dass** mindestens der genannte Behälter (10) und der genannte Deckel (20) aus Metall hergestellt sind, um der Vorrichtung Robustheit zu verleihen.

6. Betriebsverfahren einer beweglichen Aufnahmevorrichtung (1) einer optischen Faserspule (40) gemäß einem beliebigen der vorhergehenden Patentansprüche, das **dadurch gekennzeichnet ist, dass** es die folgenden Phasen enthält:
a) Wenn die bewegliche Vorrichtung (1), die die optische Faserspule (40) enthält, geschlossen ist, drückt die Radialfeder, die den elastischen Vorrichtungen (11) angehört, auf das Profil (54) des Formzylinders (52), der den Gleitvorrichtungen (50) angehört, die Axialfeder, die den elastischen Vorrichtungen (31) angehört, drückt auf die Spule (30) im Verhältnis zum Behälter (10), die elastische Kante (21) des Deckels (20) stimmt mit der entsprechenden Kante (12) des Behälters (10) überein, die aufgewickelte optische Faser (45) sitzt im ersten ringförmigen Raum (32) der Spule (30), mindestens ein Abschnitt der flexiblen Hülle (43, 44) und mindestens ein Anschlussende (41, 42) sitzen aufgewickelt im zweiten ringförmigen Raum (33) der Spule (30);
b) Um die bewegliche Vorrichtung (1) durch manuelles Drücken der Taste (53) zu öffnen, drückt die Radialfeder, die den elastischen Vorrichtungen (11) angehört, auf das Profil (55) des Formzylinders (52), um die Freigabe der Spule (30) zu ermöglichen, die Axialfeder, die den elastischen Vorrichtungen (31) angehört, schiebt die Spule (30) im Verhältnis zum Behälter (10) und ermöglicht das Anheben der Spule (30) und die Öffnung des Deckels (20) im Verhältnis zum Behälter (10), die aufgewickelte optische Faser (45) sitzt im ersten ringförmigen Raum (32) der Spule (30), mindestens ein Abschnitt der flexiblen Hülle (43, 44) und mindestens ein Anschlussende (41, 42) werden durch die elastische Wirkung des mindestens einen Abschnitts der flexiblen Hülle (43, 44) aus dem Behälter (10) geschoben;
c) Um die bewegliche Vorrichtung (1) durch manuelles Drücken des Deckels (20) zu schließen, wird die Phase a) wiederhergestellt, die elastische Kante (21) des Deckels (20) stimmt mit der entsprechenden Kante (12) des Behälters (10) überein, die aufgewickelte optische Faser (45) sitzt im ersten ringförmigen Raum (32) der Spule (30), mindestens ein Abschnitt der flexiblen Hülle (43, 44) und mindestens ein Anschlussende (42, 42) bleiben außerhalb des Behälters (10) blockiert, die elastische Kante (21) des Deckels (20) stimmt mit der entsprechenden Kante (12) des Behälters (10) überein und drückt auf einen Punkt des Abschnitts der flexiblen Hülle (43, 44).

## Revendications

1. Dispositif mobile de logement (1) d'une bobine de fibre optique (40) comprenant un conteneur (10) accessible à travers un couvercle (20) et pouvant accueillir au moins un rouleau (30) apte à permettre d'enrouler une fibre optique (45) appartenant à la bobine de fibre optique (40) ; cette fibre optique (45) est reliée au moins à une terminaison de connexion (41, 42) ; des moyens élastiques (11, 31, 43, 44, 51) et des moyens de glissement (50) sont aptes à permettre d'extraire automatiquement du conteneur (10) la terminaison de connexion (41, 42) ; le couvercle (20) comprend un bord élastique (21) qui correspond au bord (12) relatif du conteneur (10) ; ce bord élastique (21) est apte à permettre de fermer le conteneur (10) pour bloquer le déroulement de la bobine de fibre optique (40), après avoir extrait automatiquement du conteneur (10) au moins une terminaison de connexion (41, 42) ; **caractérisé en ce qu'**un rouleau (30) au moins est relié au conteneur (10) par l'intermédiaire d'un ressort radial (11) et d'un ressort axial (31) ; le ressort radial (11) et le ressort axial (31) appartiennent respectivement aux moyens élastiques ; le ressort radial est apte à pousser un cylindre moulé (52) appartenant aux moyens de glissement (50) pour bloquer au moins un rouleau (30) à l'intérieur du conteneur (10) ; le ressort axial est apte à séparer et soulever au moins un rouleau (30) par rapport au conteneur (10).

2. Dispositif mobile de logement (1) d'une bobine de fibre optique (40), selon la revendication précédente, **caractérisé en ce que** le cylindre moulé (52) comprend un premier et un second tronçon (54, 55) dont le premier est apte à interagir avec au moins un ressort radial appartenant aux moyens élastiques (11) pour bloquer au moins un rouleau (30) à l'intérieur du conteneur (10) alors que le second est apte à séparer et soulever au moins un rouleau (30) par rapport au conteneur (10).

3. Dispositif mobile de logement (1) d'une bobine de fibre optique (40), selon la revendication précédente, **caractérisé en ce que** le cylindre moulé (52) est relié à un bouton (53) qui doit être enfoncé manuellement.

4. Dispositif mobile de logement (1) d'une bobine de fibre optique (40), selon la revendication précédente, **caractérisé en ce qu'**un rouleau (30) au moins est solidaire du couvercle (20).

5. Dispositif mobile de logement (1) d'une bobine de fibre optique (40), selon la revendication précédente, **caractérisé en ce qu'**au moins un conteneur (10) et un couvercle (20) sont réalisés en métal pour assurer la résistance du dispositif.

6. Procédé opérationnel d'un dispositif mobile de logement (1) d'une bobine de fibre optique (40) selon l'une des revendications précédentes, **caractérisé en ce qu'**il comprend les étapes suivantes :
a) quand le dispositif mobile (1) contenant la bobine de fibre optique (40) est fermé, le ressort radial appartenant aux moyens élastiques (11) appuie contre le profil (54) du cylindre moulé (52) appartenant aux moyens de glissement (50) ; le ressort axial appartenant aux moyens élastiques (31) appuie contre le rouleau (30) par rapport au conteneur (10) ; le bord élastique (21) du couvercle (20) correspond au bord (12) relatif du conteneur (10) ; la fibre optique (45) enroulée est logée dans le premier logement annulaire (32) du rouleau (30) ; au moins un morceau de gaine flexible (43, 44) et une terminaison de connexion (41, 42) sont logés, enroulés, dans le second logement annulaire (33) du rouleau (30) ;
b) pour ouvrir le dispositif mobile (1), enfoncer manuellement le bouton (53) ; le ressort radial appartenant aux moyens élastiques (11) appuie sur le profil (55) du cylindre moulé (52) pour permettre le déblocage du rouleau (30) ; le ressort axial appartenant aux moyens élastiques (31) appuie sur le rouleau (30) par rapport au conteneur (10) pour permettre de soulever le rouleau (30) et d'ouvrir le couvercle (20) du conteneur (10) ; la fibre otique (45) enroulée est logée dans le premier logement annulaire (32) du rouleau (30) ; au moins un morceau de gaine flexible (43, 44) et une terminaison de connexion (41, 42) sont poussés à l'extérieur du conteneur (10) par effet de l'élasticité d'un morceau de gaine flexible (43, 44) au moins ;
c) pour fermer le dispositif mobile (1), enfoncer manuellement le couvercle (20), l'étape a) est rétablie ; le bord élastique (21) du couvercle (20) correspond au bord (12) relatif du conteneur (10) ; la fibre otique (45) est enroulée dans le premier logement annulaire (32) du rouleau (30) ; au moins un morceau de gaine flexible (43, 44) et une terminaison de connexion (41, 42) restent bloqués à l'intérieur du conteneur (10) ; le bord élastique (21) du couvercle (20) correspond au bord (12) relatif du conteneur (10) appuie sur un point quelconque du morceau de gaine flexible (43, 44).
